(19) Europäisches Patentamt
European Patent Office
Office européen des brevets

(11) Publication number: **0 468 978 B1**

(12) **EUROPEAN PATENT SPECIFICATION**

(45) Date of publication of patent specification: **30.03.94**

(51) Int. Cl.[5]: **C22B 3/40**, C22B 41/00, C01G 17/00

(21) Application number: **90905390.2**

(22) Date of filing: **11.04.90**

(86) International application number: **PCT/BE90/00016**

(87) International publication number: **WO 90/13677 (15.11.90 90/26)**

(54) **PROCESS FOR RECOVERING GERMANIUM.**

(30) Priority: **28.04.89 BE 8900472**

(43) Date of publication of application: **05.02.92 Bulletin 92/06**

(45) Publication of the grant of the patent: **30.03.94 Bulletin 94/13**

(84) Designated Contracting States: **AT BE DE ES FR GB IT NL**

(56) References cited:
**EP-A- 0 046 437**
**EP-A- 0 068 540**
**EP-A- 0 068 541**
**EP-A- 0 102 882**
**EP-A- 0 143 749**
**EP-A- 0 167 414**
**EP-A- 0 199 905**
**EP-A- 0 249 520**
**EP-A- 0 264 993**
**EP-A- 0 267 180**
**EP-A- 0 313 201**
**FR-A- 2 277 897**
**FR-A- 2 306 271**

(73) Proprietor: **n.v. UNION MINIERE s.a.**
**avenue Emile Rousseau**
**B-6001 Marcinelle (Charleroi)(BE)**

(72) Inventor: **VLIEGEN, Jean, H., M.**
**Larikslaan 18**
**B-2451 Lichtaart(BE)**
Inventor: **HAESEBROEK, Guy, G., L., B.**
**Floris Decuijperstraat 12**
**B-2510 Mortsel(BE)**
Inventor: **DE SCHEPPER, Achille, J., M.**
**Esdoornlaan 8**
**B-2451 Lichtaart(BE)**

(74) Representative: **Saelemaekers, Juul et al**
**c/o UNION MINIERE**
**Gulledelle 92**
**B-1200 Brussels (BE)**

EP 0 468 978 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for separating germanium from a germanium-bearing aqueous sulphate solution, according to which said solution is brought into contact with an organic phase, containing a substituted 8-hydroxyquinoline and an organophosphorus compound, said contact being operated at a pH at which the organic phase is loaded with germanium.

Such a process is described in EP-A-199905. In this known process one starts for instance from a sulphate solution with 220 mg Ge/l, 110 g Zn/l and 32 g $H_2SO_4$/l, originating from flue dust leaching. This solution is brought into contact at 35°C with an organic phase, containing a mixture of substituted 8-hydroxyquinolines as well as tri-n-octylphosphinoxide (TOPO), for instance a solution composed of 15 % in volume of a hydroxyquinoline mixture, 0.1 mol TOPO, 40 % in volume of isodecanol and, for the remaining, kerosene; the hydroxyquinoline mixture itself is composed of 10 % in volume of "Kelex 100" and 90 % in volume of "LIX 26", Kelex 100 and LIX 26 being trade names for extracting agents containing one or more substituted 8-hydroxyquinolines as active component. At the low pH that sets up when the acid starting solution (32 g $H_2SO_4$/l) is brought into contact with the organic phase, the largest part of the germanium is transferred from the starting solution into the organic phase from which germanium is recovered afterwards by treatment with a NaOH solution.

This known process is especially directed to the recovery of germanium from solutions originating as an intermediate product or a by-product in the extractive metallurgy of metals such as Al, Pb, Cu and Zn. However, these solutions can contain, besides Ge, also In and/or Ga, particularly when solutions from the zinc metallurgy are concerned. To treat solutions containing besides Ge, also In and/or Ga, this known process is less suited in that sense that it does not enable to transfer in one an the same operation Ge, In and Ga into the organic phase.

The aim of the present invention is to provide a process such as defined herebefore enabling, when the germanium-bearing aqueous sulphate solution contains In and/or Ga, to transfer in one and the same operation these elements into the organic phase, together with germanium.

This invention is based on the discovery that a mixture of a substituted 8-hydroxyquinoline and an organophosphorus compound containing at least one phosphorus-bearing acid function, exhibits a strong synergy for the extraction of Ge as well as of In and Ga from a weak acid sulphate medium.

The process according to the invention is characterized in that one uses an indium and/or gallium containing germanium-bearing aqueous sulphate solution as said germanium-bearing aqueous sulphate solution, one uses a compound containing at least one phosphorus-bearing acid function as said organophosphorus compound and one operates said contact at a pH of 0.5-2.5 in the presence of indium and gallium as well as in the absence of gallium and at a pH of 0.5-4 in the absence of indium, whereby the organic phase loads itself with indium and/or gallium too.

Operating said contact at a given pH, e.g. at pH 2, means here that the acidity of the aqueous solution and/or of the organic phase before and/or during their contact is adjusted in such a way that the aqueous solution has a pH of 2 at the moment the contact between both phases will be interrupted, which normally happens when the chemical equilibrium between both phases is reached or almost reached.

When the germanium-bearing starting solution contains both indium and gallium, it is necassary to operate said contact at a pH of 0.5-2.5; if one operates at a pH lower than 0.5, then indium and gallium are insufficiently extracted and at a pH exceeding 2.5 indium precipitates; one operates preferably at pH 1-2.5 and most preferably at pH 1-2, for example at pH 1.5-1.7.

When the germanium-bearing starting solution contains indium but no gallium, it is also necessary to operate said contact at a pH of 0.5-2.5, since indium is insufficiently extracted at a pH lower than 0.5 and it precipitates at a pH exceeding 2.5; one operates preferably at pH 1-2 and most preferably at pH 1.2-1.7.

When the germanium-bearing starting solution contains gallium but no indium, it is necessary to operate said contact at a pH of 0.5-4; gallium is insufficiently extracted at a pH lower than 0.5, as mentioned before, and at a pH exceeding 4 gallium precipitates; one operates preferably at pH 1-4 and most preferably at pH 1-2.5, for example at pH 1.5-2.

It is self-evident that, when the germanium-bearing starting solution contains both indium and gallium and one is, for whatsoever reason, not interested in the recovery of one of these metals e.g. gallium, one shall operate said contact at a pH which is optimum for the recovery of the other metal, e.g. indium.

The process of the invention is particularly useful for treating germanium-bearing solutions containing In and/or Ga and which contain, apart from water, zinc sulphate as main constituent. Such solutions occur frequently as an intermediate product or as a by-product in the zinc metallurgy, more particularly in the electro-winning of zinc.

Any substituted 8-hydroxyquinoline described or referred to in the European patent application EP-A-0324963 can be used. One uses preferably a quinoline from the group of quinolines with the general formula

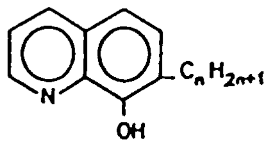

wherein n ranges between 5 and 15.
A typical representative of this group is 7-(1-methyl-4-ethyl)-octyl-8-hydroxyquinoline, which is the active component of an extractant commercialized by Schering AG under the trade name "Kelex 100".

As an organophosphorus compound containing at least one phosphorus-bearing acid function, one can use any compound from the group of compounds with the general formula

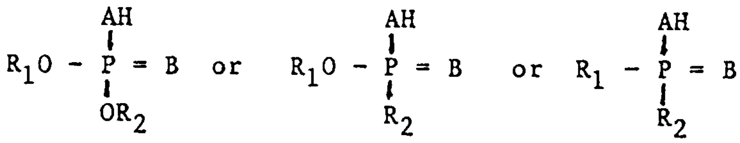

wherein
$R_1$ is an alkyl-, alkenyl-, aryl- or alkylaryl radical or an alicyclic radical with 1 to 20, preferably 5 to 15, carbon atoms,
$R_2$ is hydrogen or an alkyl-, alkenyl-, aryl-, alkylaryl radical or and alicyclic radical with 1 to 20, preferably 5 to 15, carbon atoms, and
A and B, that can be identical or different, represent an oxygen- or sulphur atom.
Typical representatives of this group are di-(2-ethyl)-hexyl-phosphoric acid (D2EHPA or DEHPA), tridecyl phosphoric acid, mono-(2-ethyl)-hexyl-(2-ethyl)-hexyl-phosphonic acid-ester (sold under the trade name PC-88 A), mono-(2-ethyl)-hexyl-benzyl-phosphonic acid (EHBPA), bis (2,4,4-trimethyl)-pentyl-phosphinic acid (sold under the trade name Cyanex 272), di-(2-ethyl)-hexyl-dithiophosphoric acid, di-(2-ethyl)-hexyl-thiophosphoric acid, bis-(2,4,4-trimethyl)-pentyl-dithiophosphinic acid (sold under the trade name Cyanex 301) and bis-(2,4,4-trimethyl)-pentyl-monothiophosphinic acid (sold under the trade name Cyanex 302).
One uses preferably a phosphonic acid such as e.g. PC-88 A, since a phosphinic acid such as e.g. Cyanex 272 is less efficient when extracting Ga and In and since a phosphoric acid such as, e.g. D2EHPA can raise difficulties when processing the loaded organic phase, particularly when the latter contains iron; indeed, it has been found that it is hard to elute iron from an organic phase that contains D2EHPA (when there is iron in the starting solution, part of it comes into the organic phase together with Ge, In and/or Ga).

The ratio between the volume of quinoline and the volume of phosphorus compound that is used, ranges preferably from 1:10 to 10:1 and most preferably from 1:2 to 2:1.

One can use a liquid organic phase and then apply the liquid-liquid extraction technique.
Normally said liquid organic phase has an inert solvent as main component. The inert solvent can have a strongly marked aliphatic character as well as a strongly marked aromatic character; it can have a mixed aliphatic-aromatic character too.
Said liquid organic phase contains preferably a modifier too, i.e. an agent that, on the one hand, prevents the formation of an emulsion and, on the other hand, increases the solubility of the metal complexes, that are formed, in the solvent and thereby avoids the formation of a third phase.The modifier can be a heavy alcohol (for instance isodecanol), a heavy phenol (for instance nonylphenol), tributylphosphate, TOPO or a sulphoxide.
When making use of a liquid organic phase, the technique of the emulsified liquid membranes can also be applied; this technique is also called LSM- or ELM technique (LSM = Liquid Surfactant Membranes and ELM - Emulsified Liquid Membranes).

One can also use an organic phase that contains a solid carrier, by which the quinoline and the organophosphorus compound (or a solution thereof) are carried.
If the solid carrier is a porous membrane, the organic phase shall of course be brought into contact with the starting solution according to the SLM-technique (SLM = Supported Liquid Membrane). If the solid carrier is a resin, the organic phase shall of course be used like the traditional ion exchange resins were used till

now. The quinoline and the acid phosphorus compound can be adsorbed on the resin, but they can also be embedded in it, for instance according to the method described in DE-A-2162951.

One can also use an organic phase containing several substituted 8-hydroxyquinolines and/or acid phosphorus compounds.

It is possible to operate said contact at ambient temperature, but it is more advantageous to operate at a temperature above 40 ° C, since the extraction equilibrium is then faster reached and since this equilibrium is more favourable too. Thus, the temperature has a favourable effect on the kinetics as well as on the thermodynamics of the extraction reaction. From an economical point of view, it is however senseless to operate at 80 ° C or higher.

Germanium can be eluted from the loaded organic phase by bringing the latter into contact with a NaOH solution, the pH of which is higher than 12, preferably a solution with at least 10 g/l NaOH and particularly a solution with at least 50 g/l NaOH. One can for instance operate as described in EP-B-46437, EP-B-68541, EP-B-167414 or EP-A-199905.

Indium can be eluted from the loaded organic phase by bringing the latter into contact either with a $H_2SO_4$ solution with more than 50 g/l $H_2SO_4$, preferably a solution with more than 100 g/l $H_2SO_4$, or with a HCl solution with 10-100 g/l HCl, preferably a solution with 20-50 g/l HCl.

Gallium can be eluted from the loaded organic phase by bringing the latter into contact either with a $H_2SO_4$ solution with more than 100 g/l $H_2SO_4$, preferably a solution with more than 150 g/l $H_2SO_4$, or with a HCl solution with 40-100 g/l HCl, preferably a solution with 60-70 g/l HCl.

Indium and gallium can be eluted together from the loaded organic phase by bringing the latter into contact either with a $H_2SO_4$ solution with more than 100 g/l $H_2SO_4$, preferably a solution with more than 150 g/l $H_2SO_4$, or with a HCl solution with 40-70 g/l HCl.

The process of the invention is illustrated by the examples following hereafter. In all these examples the aqueous sulphate solutions are industrial solutions, except in the examples 4 and 5, in which one starts from a synthetic sulphate solution.

Example 1

This example shows the synergy between Kelex 100, on the one hand, and either D2EHPA (phosphoric acid), or PC-88 A (phosphonic acid) or Cyanex 272 (phosphinic acid), on the other hand, for the extraction of Ge, In and Ga from a weak acid sulphate medium.

Kelex 100 is, as mentioned before, the trade name of an extracting agent, containing 7-(1-methyl-4-ethyl)-octyl-8-hydroxyquinoline as active constituent, the structural formula of this compound being

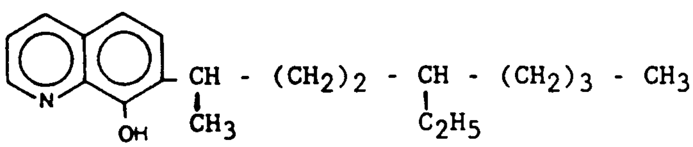

D2EHPA is the generally used name of an extracting agent consisting of di-(2-ethyl)-hexyl-phosphoric acid with the structural formula

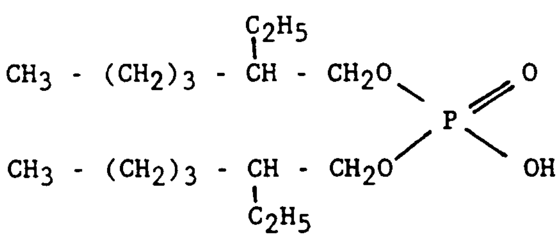

PC-88 A is, as already mentioned, the trade name of an extracting agent consisting of mono-(2-ethyl)-hexyl-(2-ethyl)-hexyl-phosphonic acid-ester, the structural formula of this compound being

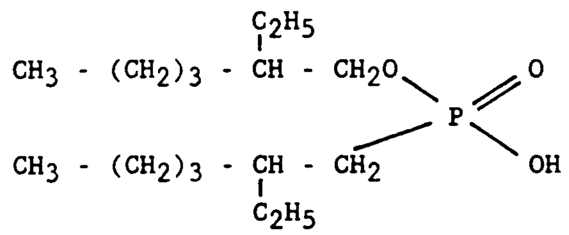

Cyanex 272 is, as already mentioned, the trade name of an extracting agent consisting of bis (2,4,4-trimethyl)-pentylphosphinic acid, the structural formula thereof being

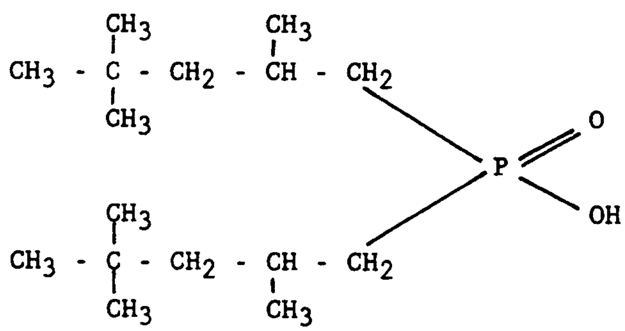

Starting from the beforementioned extracting agents, isodecanol (ID) and Escaid 120 (kerosene), 7 different organic phases (OP) are prepared with the following composition in volume % :

OP1 : 7.5 Kelex 100 - 25 ID - 67.5 Escaid 120
OP2 : 7.5 D2EHPA - 25 ID - 67,5 Escaid 120
OP3 : 7.5 D2EHPA - 7.5 Kelex 100 - 25 ID - 60 Escaid 120
OP4 : 7.5 PC-88 A - 25 ID - 67.5 Escaid 120
OP5 : 7.5 PC-88 A - 7.5 Kelex 100 - 25 ID - 60 Escaid 120
OP6 : 7.5 Cyanex 272 - 25 ID - 67.5 Escaid 120
OP7 : 7.5 Cyanex 272 - 7.5 Kelex 100 - 25 ID - 60 Escaid 120

The sulphate solution to be treated has a pH of 1.35 and contains per liter : 100 g Zn, 0.025 g Ge, 0.280 g In and 0.070 g Ga.

Three volumes of sulphate solution are stirred at 50 °C for 10 minutes with one volume of OP1. One measures the pH of the aqueous phase and one allows the phases to separate. Then the Ge, In and Ga concentration is determined in the aqueous phase ($[Ge]_A$, $[In]_A$ and $[Ga]_A$ in g/l) and in the organic phase (-$[Ge]_O$, $[In]_O$ and $[Ga]_O$ in g/l), after which the distribution coefficients ($K_D$) are calculated.
The same test is carried out with the six other organic phases.
The results of these tests are given in table 1.

Table 1

| OP nr | Active Compon. | $[Ge]_A$ | $[Ge]_O$ | $K_{D_{Ge}}$ | $[In]_A$ | $[In]_O$ | $K_{D_{In}}$ | $[Ga]_A$ | $[Ga]_O$ | $K_{D_{Ga}}$ | pH |
|---|---|---|---|---|---|---|---|---|---|---|---|
| 1 | Kelex 100 | 0.015 | 0.030 | 2.0 | 0.203 | 0.231 | 1.14 | 0.070 | 0 | 0 | 1.32 |
| 2 | D2EHPA | 0.029 | 0 | 0 | 0.040 | 0.720 | 18 | 0.070 | 0 | 0 | 1.28 |
| 3 | D2EHPA + K100 | 0.009 | 0.048 | 5.33 | 0.010 | 0.810 | 81 | 0.060 | 0.030 | 0.5 | 1.26 |
| 4 | PC-88 A | 0.026 | 0 | 0 | 0.064 | 0.648 | 10.1 | 0.060 | 0.030 | 0.5 | 1.31 |
| 5 | PC-88 A + K100 | 0.007 | 0.054 | 7.7 | 0.012 | 0.804 | 67 | 0.050 | 0.060 | 1.20 | 1.27 |
| 6 | CNX 272 | 0.028 | 0 | 0 | 0.240 | 0.160 | 0.67 | 0.070 | 0 | 0 | 1.27 |
| 7 | CNX 272 + K100 | 0.012 | 0.039 | 3.25 | 0.120 | 0.480 | 4.0 | 0.060 | 0.030 | 0.5 | 1.22 |

These results show undeniably a synergic effect between Kelex 100 and each of the phosphor compounds for the extraction of Ge, In and Ga.

Indeed, Ge has a $K_D$ = 2 when using only Kelex 100 and a $K_D$ = 0 when using only D2EHPA, PC-88 A or Cyanex 272, but a $K_D$ = 5.33, 7,7 and 3.25 when using Kelex 100 with respectively D2EHPA, PC-88 A and Cyanex 272. Indium has a $K_D$ = 1.14 when using only Kelex 100 and a $K_D$ = 18, 10 and 0.67 when using respectively D2EHPA, PC-88 A and Cyanex 272 alone, but a $K_D$ = 81, 67 and 4 when using Kelex 100 with respectively D2EHPA, PC-88 A and Cyanex 272.

Finally, gallium has a $K_D$ = 0 when using only Kelex 100 and a $K_D$ = 0, 0.5 and 0 when using respectively D2EHPA, PC-88 A and Cyanex 272 alone, but a $K_D$ = 0.5, 1.2 and 0.5 when using Kelex 100 with respectively D2EHPA, PC-88 A and Cyanex 272.

Example 2

This example shows the synergy between LIX 26 and PC-88 A for the extraction of Ge, In and Ga from a weak acid sulphate medium.

LIX 26 is the trade name of a 7-substituted 8-hydroxyquinoline, which is commercialized by Henkel Corporation and which consists of a mixture of branched alkyl isomers with one or two unsaturations in the alkyl side chain. $C_{11}H_{22}$ and $C_{12}H_{24}$ are the most abundant alkylates of 8-hydroxyquinoline found in LIX 26 (see "A novel solvent extraction system for the refining of precious metals" by G.P. Demopoulos at al. in ISEC '86 International Solvent Extraction Conference - München, 11-16 September 1986, Preprints Vol. II, pp. II-581 - II-588).

The sulphate solution has a pH of 1.35 and contains per litre : 90 g Zn, 0.032 g Ge, 0.370 g Ga and 0.200 g In. One operates with the following organic phases :

OP1 : 7.5 LIX 26 - 25 ID - 67.5 Escaid 120
OP2 : 7.5 PC-88 A - 25 ID - 67.5 Escaid 120
OP3 : 7.5 LIX 26 - 7.5 PC-88 A - 25 ID - 60 Escaid 120

One proceeds in the same way as in example 1, i.e. extraction in one step with an organic phase/aqueous phase ratio (O/A) = 1/3, at 50 °C and with a stirring time of 10 minutes, and the same measurements are made as in example 1.

The results are given in table 2.

Table 2

| OP | Active Compon. | $[Ge]_A$ | $[Ge]_O$ | $K_{D_{Ge}}$ | $[In]_A$ | $[In]_O$ | $K_{D_{In}}$ | $[Ga]_A$ | $[Ga]_O$ | $K_{D_{Ga}}$ | pH |
|---|---|---|---|---|---|---|---|---|---|---|---|
| 1 | LIX 26 | 0.024 | 0.026 | 1.09 | 0.190 | 0.044 | 0.23 | 0.340 | 0.116 | 0.34 | 1.00 |
| 2 | PC-88 A | 0.032 | 0 | 0 | 0.070 | 0.390 | 5.57 | 0.380 | 0 | 0 | 1.05 |
| 3 | PC-88 A + LIX 26 | 0.015 | 0.051 | 3.43 | 0.030 | 0.510 | 17.00 | 0.300 | 0.210 | 0.70 | 1.10 |

These results show also an undeniable synergic effect between LIX 26 and PC-88 A for the extraction of Ge, In and Ga.
Indeed, Ge has a $K_D$ = 1.09 when using only LIX 26 and a $K_D$ = 0 when using only PC-88 A, but a $K_D$ = 3.43 with a mixture of LIX 26 and PC-88 A.
Indium has a $K_D$ = 0.23 when using only LIX 26 and a $K_D$ = 5.57 when using only PC-88 A, but a $K_D$ = 17.00 with a mixture of LIX 26 and PC-88 A.
Gallium has a $K_D$ = 0.34 when using only LIX 26 and a $K_D$ = 0 when using only PC-88 A, but a $K_D$ = 0.70 with a mixture of LIX 26 and PC-88 A.

Example 3

This example shows the synergy between Kelex 100 and EHBPA for the extraction of Ge, In and Ga from a weak acid sulphate medium.

EHBPA is the generally used name of an extracting agent consisting of mono-(2-ethyl)-hexyl-benzyl-phosphonic acid with the structural formula

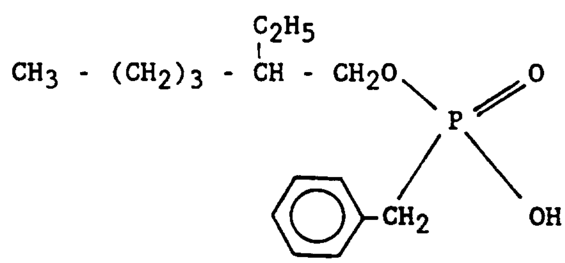

The sulphate solution has a pH of 1.35 and contains per litre : 90 g Zn, 0.032 g Ge, 0.370 g Ga and 0.200 g In. One operates with the following organic phases :

OP1 : 7.5 Kelex 100 - 25 ID - 67.5 Escaid 120
OP2 : 7.5 EHBPA - 25 ID - 67.5 Escaid 120
OP3 : 7.5 Kelex 100 - 7.5 EHBPA - 25 ID - 60 Escaid 120

One proceeds in the same way as in example 1, i.e. extraction in one step with an organic phase/aqueous phase ratio (O/A) = 1/3, at 50 °C and with a stirring time of 10 minutes, and the same measurements are made as in example 1.
The results are given in table 3.

Table 3

| OP | Active Compon. | $[Ge]_A$ | $[Ge]_O$ | $K_{D_{Ge}}$ | $[In]_A$ | $[In]_O$ | $K_{D_{In}}$ | $[Ga]_A$ | $[Ga]_O$ | $K_{D_{Ga}}$ | pH |
|---|---|---|---|---|---|---|---|---|---|---|---|
| 1 | KELEX 100 | 0.025 | 0.023 | 0.91 | 0.190 | 0.040 | 0.21 | 0.340 | 0.109 | 0.32 | 1.06 |
| 2 | EHBPA | 0.031 | 0.007 | 0.24 | 0.010 | 0.696 | 69.63 | 0.290 | 0.328 | 1.13 | 0.97 |
| 3 | EHBPA + K 100 | 0.012 | 0.062 | 5.13 | <0.001 | 0.603 | >603 | 0.070 | 0.915 | 13.07 | 0.94 |

These results show also an undeniable synergic effect between Kelex 100 and EHBPA for the extraction of Ge, In and Ga.
Indeed, Ge has a $K_D$ = 0.91 when usine only Kelex 100 and a $K_D$ = 0.24 when using only EHBPA, but a $K_D$ = 5.13 with a mixture of Kelex 100 and EHBPA.
Indium has a $K_D$ = 0.21 when using only Kelex 100 and a $K_D$ = 69.63 when using only EHBPA, but a $K_D$ > 603 with a mixture of Kelex 100 and EHBPA.
Gallium has a $K_D$ = 0.32 when using only Kelex 100 and a $K_D$ = 1.13 when using only EHBPA, but a $K_D$ = 13.07 with a mixture of Kelex 100 and EHBPA.

Example 4

This example shows the synergy between Kelex 100 and LIX 26, on the one hand, and PC-88 A, on the other hand, for the extraction of Ge, In and Ga from a weak acid sodium sulphate solution.
The sodium sulphate solution has a pH of 1.35 and contains per litre : 52.9 g Na, 0.109 g Ge, 0.110 g Ga and 0.400 g In.
One operates with the following organic phases :

OP1 : 7.5 Kelex 100 - 25 ID - 67.5 Escaid 120
OP2 : 7.5 LIX 26 - 25 ID - 67.5 Escaid 120
OP3 : 7.5 PC-88 A - 25 ID - 67.5 Escaid 120
OP4 : 7.5 Kelex 100 - 7.5 PC-88 A - 25 ID - 60 Escaid 120
OP5 : 7.5 LIX 26 - 7.5 PC-88 A - 25 ID - 60 Escaid 120

One proceeds in the same way as in example 1, i.e. extraction in one step with an organic phase/aqueous phase ratio (O/A) = 1/3, at 50 °C and with a stirring time of 10 minures, and the same measurements are made as in example 1.
The results are given in table 4.

Table 4

| OP nr | Active Compon. | $[Ge]_A$ | $[Ge]_O$ | $K_{D_{Ge}}$ | $[In]_A$ | $[In]_O$ | $K_{D_{In}}$ | $[Ga]_A$ | $[Ga]_O$ | $K_{D_{Ga}}$ | pH |
|---|---|---|---|---|---|---|---|---|---|---|---|
| 1 | Kelex 100 | 0.083 | 0.081 | 0.97 | 0.310 | 0.280 | 0.90 | 0.120 | 0 | 0 | 1.02 |
| 2 | LIX 26 | 0.079 | 0.095 | 1.20 | 0.310 | 0.287 | 0.93 | 0.110 | 0.005 | 0.05 | 1.00 |
| 3 | PC-88 A | 0.109 | 0 | 0 | 0.140 | 0.789 | 5.63 | 0.120 | 0 | 0 | 1.00 |
| 4 | K 100 + PC-88 A | 0.032 | 0.235 | 7.35 | 0.035 | 1.109 | 31.68 | 0.090 | 0.065 | 0.72 | 1.00 |
| 5 | LIX 26 + PC-88 A | 0.013 | 0.292 | 22.45 | 0.020 | 1.154 | 57.69 | 0.080 | 0.095 | 1.18 | 1.01 |

These results show once more an undeniable synergic effect between PC-88 A and both substituted 8-hydroxyquinolines for the extraction of Ge, In and Ga from a weak acid sulphate medium.
Indeed, Ge has a $K_D$ = 0.97 and 1.20 when using respectively Kelex 100 and LIX 26 alone and a $K_D$ = 0

when using PC-88 A alone, but a $K_D$ = 7.35 and 22.45 when using PC-88 A with respectively Kelex 100 and LIX 26.
Indium has a $K_D$ = 0.90 and 0.93 when using respectively Kelex 100 and LIX 26 alone and a $K_D$ = 5.63 when using PC-88 A alone, but a $K_D$ = 31.68 and 57.69 when using PC-88 A with respectively Kelex 100 and LIX 26.
Gallium has a $K_D$ = 0 and 0.05 when using respectively Kelex 100 and LIX 26 alone and a $K_D$ = 0 when using PC-88 A alone, but a $K_D$ = 0.72 and 1.18 when using PC-88 A with respectively Kelex 100 and LIX 26.

Example 5

This example shows that the synergy between Kelex 100 and PC-88 A for the extraction of Ge, In and Ga from a weak acid sulphate medium has a thermodynamical character.

The sulphate solution has a pH of 1.35 and contains per litre : 150 g $Na_2SO_4$, 0.097 g Ge, 0.130 g Ga and 0.190 g In.
One operates with the following organic phases :

OP1 : 7.5 PC-88 A - 25 ID - 67.5 Escaid 120
OP2 : 7.5 Kelex 100 - 25 ID - 67.5 Escaid 120
OP3 : 7.5 PC-88 A - 7.5 Kelex 100 - 25 ID - 60 Escaid

The sulphate solution is treated with these organic phases in the following conditions : O/A = 1/3; temperature = 50 °C; stirring time = 120 min. The percentages extracted Ge, Ga and In are determined after 10, 20, 40, 60 and 120 minutes of contact.
The results of this tests are represented graphically on the diagrams of figure 1 with the duration of contact in minutes on the abscissa and the percentage of extraction on the ordinate.
Figure 1 shows clearly that the synergy has a thermodynamical character. Indeed, the extraction yields obtained at equilibrium with OP3 are clearly higher than the sum of the extraction yields obtained at equilibrium with OP1 and OP2.

Example 6

This example relates to the extraction of Ge and In from a sulphate solution according to the process of the invention.

The sulphate solution has a pH of 1.35 and contains per litre : 100 g Zn, 0.75 g Ge and 0.7 g In.
One operates with the following organic phases :

OP1 : 5 Kelex 100 - 5 PC-88 A - 25 ID - 60 Escaid 120
OP2 : 5 Kelex 100 - 7.5 PC-88 A - 25 ID - 62.5 Escaid 120
OP3 : 5 Kelex 100 - 10 PC-88 A - 25 ID - 60 Escaid 120
OP4 : 7.5 Kelex 100 - 10 PC-88 A - 25 ID - 60 Escaid 120
OP5 : 10 Kelex 100 - 10 PC-88 A - 25 ID - 55 Escaid 120

One proceeds in the same way as in example 1, i.e. extraction in one step with an organic phase/aqueous phase ratio (O/A) = 1/3, at 50 °C and with a stirring time of 10 minutes, and the same measurements are made as in example 1.
The results are given in table 5.

Table 5

| OP nr. | % K100 | % PC88A | $[Ge]_A$ | $[Ge]_O$ | $KD_{Ge}$ | $[In]_A$ | $[In]_O$ | $KD_{In}$ | pH |
|---|---|---|---|---|---|---|---|---|---|
| 1 | 5 | 5 | 0.057 | 0.054 | 0.95 | 0.20 | 1.50 | 7.5 | 1.18 |
| 2 | 5 | 7.5 | 0.031 | 0.132 | 4.26 | 0.11 | 1.77 | 16.1 | 1.16 |
| 3 | 5 | 10 | 0.029 | 0.138 | 4.76 | 0.06 | 1.92 | 32.0 | 1.14 |
| 4 | 7.5 | 7.5 | 0.021 | 0.162 | 7.71 | 0.07 | 1.89 | 27.0 | 1.15 |
| 5 | 10 | 10 | 0.016 | 0.177 | 11.06 | 0.02 | 2.04 | 102 | 1.12 |

Example 7

This example shows the influence of the pH in the process of the invention.

In a first test a sulphate solution of pH 1.5 and containing 100 g/l Zn, 0.092 g/l Ge, 0.3 g/l In and 0.11 g/l Ga is treated with an organic phase composed of 10 % Kelex 100, 5 % PC-88 A, 25 % ID and 60 % Escaid 120.

One operates in 2 steps : in the first step the starting solution is brought into contact with the organic phase and in the second step the aqueous phase, originating from the first step, is treated with fresh organic phase.

Both steps are carried out in the following conditions : O/A = 1/2; temperature = 50 ° C; stirring time = 10 minutes.

In both steps the same measurements are made as in example 1.

In a second and third test one proceeds in the same way as in the first test, but instead of starting with a sulphate solution with a pH of 1.5, one starts now with a solution with a pH of respectively 1.25 and 1.00.

The resulsts of these three tests are given in table 6.

Table 6

| Step | $[Ge]_A$ | $[Ge]_O$ | $K_{D_{Ge}}$ | $[Ga]_A$ | $[Ga]_O$ | $K_{D_{Ga}}$ | $[In]_A$ | $[In]_O$ | $K_{D_{In}}$ | pH |
|---|---|---|---|---|---|---|---|---|---|---|
| Test 1 : pH = 1.5 | | | | | | | | | | |
| 1 | 0.013 | 0.151 | 11.65 | 0.040 | 0.137 | 3.437 | ≤0.010 | 0.552 | ≥55.18 | 1.300 |
| 2 | 0.002 | 0.022 | 11.04 | 0.020 | 0.041 | 2.040 | <0.010 | - | - | 1.240 |
| Test 2 : pH = 1.25 | | | | | | | | | | |
| 1 | 0.009 | 0.159 | 17.61 | 0.070 | 0.083 | 1.186 | 0.012 | 0.548 | 45.67 | 1.190 |
| 2 | <0.001 | 0.016 | >16.04 | 0.050 | 0.042 | 0.840 | <0.010 | - | - | 1.160 |
| Test 3 : pH = 1.00 | | | | | | | | | | |
| 1 | 0.005 | 0.168 | 33.56 | 0.080 | 0.066 | 0.824 | 0.028 | 0.526 | 18.78 | 0.950 |
| 2 | <0.001 | 0.008 | > 8.184 | 0.070 | 0.022 | 0.312 | <0.010 | - | - | 0.950 |

It appears from these results that an increase of pH increases the $K_D$ of In and Ga and decreases the $K_D$ of Ge.

Example 8

This example shows the influence of the duration of contact and the temperature in the process of the invention.

In a first test a sulphate solution with a pH of 1.35 containing 100 g/l Zn, 0.092 g/l Ge and 0.3 g/l In is treated with an organic phase composed of 7.5 % Kelex 100, 7.5 % PC-88 A, 25 % ID and 60 % Escaid 120 in the following conditions : O/A = 1/2; temperature = 35 ° C; stirring time = 20 minutes. The percentages extracted Ge and In are determined after 2, 5, 10 and 20 minutes of contact. In a second test, one proceeds in the same way as in the first test, but instead of operating at 35 ° C, one operates now at 50 ° C.

The results of these tests are represented graphically on the diagram of figure 2 with the duration of contact in minutes on the

abscissa and the percentage of extraction on the ordinate. Figure 2 shows that the temperature has a favourable influence on both the kinetics and the thermodynamics of the extraction reactions.

Example 9

This example relates to the extraction of Ge, In and Ga from a sulphate solution according to the process of the invention.

The sulphate solution has a pH of 1.5 and contains per litre : 100 g Zn, 0.092 g Ge, 0.3 g In and 0.11 g Ga. The organic phase is composed of 10 % Kelex 100, 5 % PC-88 A, 25 % ID and 60 % Escaid 120.
One operates in 2 steps : in the first step the starting solution is brought into contact with the organic phase and in the second step the aqueous phase, originating form the first step and the pH of which has been brought back to 1.5 by addition of ZnO, is treated with fresh organic phase.
Both steps are carried out in the following conditions : O/A = 1/2; temperature = 50 °C; stirring time = 10 minutes.
The results are given in table 7.

Table 7

| Step | $[Ge]_A$ | $[Ge]_O$ | $K_{D_{Ge}}$ | $[Ga]_A$ | $[Ga]_O$ | $K_{D_{Ga}}$ | $[In]_A$ | $[In]_O$ | $K_{D_{In}}$ | pH |
|---|---|---|---|---|---|---|---|---|---|---|
| 1 | 0.005 | 0.174 | 34.8 | 0.044 | 0.132 | 3.00 | 0.038 | 0.524 | 13.8 | 1.27 |
| 2 | <0.001 | - | - | <0.010 | 0.068 | >6.8 | <0.010 | 0.056 | > 5.6 | 1.40 |

It appears from these results that, when carrying out the extraction operation in more steps - which normally happens in liquid-liquid extraction -, it is advantageous to adjust the pH between the extraction steps in order to reach a higher extraction yield for Ga.

Example 10

This example relates to the elution of In and Ga from an organic phase obtained by the process of the invention by means of $H_2SO_4$.

The organic phase consists of 10 % Kelex 100. 5 % PC-88 A, 25 % ID and 60 % Escaid 120 and contains, in mg/l : 120 Ge, 150 Ga and 660 In.
In a first test this organic phase is treated with an aqueous solution of 52.1 g/l $H_2SO_4$ in the following conditions : O/A = 5/1; temperature = 35 °C; stirring time = 20 minutes. One allows the phases to separate and then one determines the acid concentration of the aqueous phase as well as the $K_D$ of Ge, In and Ga.
This test is repeated with aqueous solutions of 110.6, 263.6 and 552.4 g/l of $H_2SO_4$. The results of these tests are represented graphically in the diagram of figure 3, with log $K_D$ on the ordinate and the acid concentration of the separated aqueous phase (in g/l) on the abscissa. The log $K_D$ of Ge is not represented on the diagram; it is much higher than 2 between 50 and 280 g/l $H_2SO_4$ and higher than 1 between 450 and 550 g/l of $H_2SO_4$.
The before-mentioned and hereafter claimed elution conditions are based on these results, in sofar as they relate to $H_2SO_4$ solutions. These results make it clear, among others, that In can be selectively eluted with respect to Ga from the loaded organic phase.
Indeed, at an equilibrium concentration of ± 75 g/l $H_2SO_4$, the log $K_D$Ga and log $K_D$In amount to respectively + 0.75 and - 0.75, which corresponds to a Ga/In selectivity ($K_D$Ga/$K_D$In) of ± 30.

Example 11

This example relates to the elution of In and Ga from an organic phase obtained by the process of the invention by means of HCl.

The organic phase has the same composition as the one of example 10.
In a first test one proceeds in the same way as in the first test of example 10, but instead of using a 50 g/l $H_2SO_4$ solution, an aqueous solution of 20.4 g/l HCl is used now.
This test is repeated with aqueous solutions of 51.1, 100.2 and 200.8 g/l HCl.

The results of these tests are represented grafically in the diagram of figure 4, with log $K_D$ on the ordinate and the acid concentration of the separated aqueous phase (in g/l) on the abscissa. The log $K_D$ of Ge is neither represented here on the diagram; it is markedly higher than 2 between 15 and 150 g/l HCl.
The before-mentioned and hereafter claimed elution conditions are based on these results, in sofar as they relate to HCl solutions. The results show among others that In can be selectively eluted with respect to Ga, when operating at a sufficiently low equilibrium concentration of HCl (± 15 g/l).

**Claims**

1. A process for separating germanium from a germanium-bearing aqueous sulphate solution, according to which said solution is brought into contact with an organic phase, containing a substituted 8-hydroxyquinoline and an organophosphorus compound, said contact being operated at a pH at which the organic phase is loaded with germanium, characterized in that one uses an indium and/or gallium containing germanium-bearing aqueous sulphate solution as said germanium-bearing aqueous sulphate solution, one uses a compound containing at least one phosphorus-bearing acid function as said organophosphorus compound and one operates said contact at a pH of 0.5-2.5 in the presence of indium and gallium as well as in the absence of gallium, and at a pH of 0.5-4 in the absence of indium, whereby the organic phase is loaded with indium and/or gallium too.

2. A process according to claim 1, characterized in that the germanium-bearing aqueous sulphate solution contains, apart from water, zinc sulphate as main constituent.

3. A process according to claim 2, characterized in that the solution is an intermediate or by-product of the electrowinning of zinc.

4. A process according to one of the claims 1-3, characterized in that as said substituted 8-hydroxyquinoline a quinoline is used from the group of quinolines with the general formula

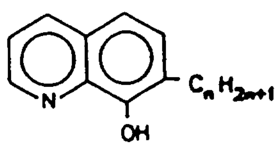

wherein n ranges between 5 and 15.

5. A process according to claim 4, characterized in that one uses 7-(1-methyl-4-ethyl)-octyl-8-hydroxyquinoline as said substituted 8-hydroxyquinoline.

6. A process according to one of the claims 1-5, characterized in that as said organophosphorus compound a compound is used from the group of compounds with the general formula

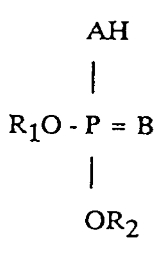 or 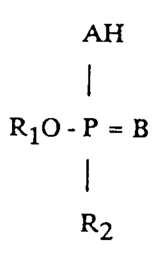 or 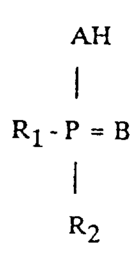

wherein
$R_1$ is an alkyl-, alkenyl-, aryl- or alkylaryl radical or an alicyclic radical with 1 to 20, preferably 5 to 15, carbon atoms,
$R_2$ is hydrogen or an alkyl-, alkenyl-, aryl-, alkylaryl radical or an alicyclical radical with 1 to 20, preferably 5 to 15, carbon atoms, and
A and B, that can be identical or different, represent an oxygen or sulphur atom.

7. A process according to claim 6, characterized in that one uses mono-(2-ethyl)-hexyl-(2-ethyl)-hexyl-phosphonic acid-ester as said organophosphorus compound.

8. A process according to claim 6, characterized in that one uses (2-ethyl)-hexyl-benzyl-phosphonic acid as said organophosphorus compound.

9. A process according to one of the claims 1-8, characterized in that the substituted 8-hydroxyquinoline and the organophosphorus compound are used in a volume ratio ranging from 1:10 to 10:1.

10. A process according to claim 9, characterized in that said ratio ranges from 1:2 to 2:1.

11. A process according to one of the claims 1-10, characterized in that the organic phase is a liquid, the main component of which is an inert solvent.

12. A process according to claim 11, characterized in that the organic phase contains an agent to prevent the formation of an emulsion.

13. A process according to claim 12, characterized in that said agent is isodecanol.

14. A process according to one of the claims 1-10, characterized in that the organic phase has a solid carrier in the form of a resin or a porous membrane, which carries the substituted 8-hydroxyquinoline and the organophosphorus compound.

15. A process according to one of the claims 1-14, characterized in that one operates said contact at a temperature above 40 ° C.

16. A process according to claim 15, characterized in that the temperature is under 80 ° C.

17. A process according to one of the claims 1-16, characterized in that one operates said contact at a pH of 1-2.5 in the presence of indium and gallium, at a pH of 1-2 in the absence of gallium, and at a pH of 1-4 in the absence of indium.

18. A process according to claim 17, characterized in that one operates said contact at a pH of 1-2 in the presence of indium and gallium, at a pH of 1.2-1.7 in the absence of gallium, and at a pH of 1-2.5 in the absence of indium.

19. A process according to claim 18, characterized in that one operates said contact at a pH of 1.5-1.7 in the presence of indium and gallium and at a pH of 1.5-2 in the absence of indium.

20. A process according to one of the claims 1-19, characterized in that germanium is recovered from the organic phase by bringing the latter into contact with a NaOH solution.

21. A process according to claim 20, characterized in that indium is recovered from the organic phase by bringing the latter into contact either with a $H_2SO_4$ solution with more than 50 g/l $H_2SO_4$ or with a HCl solution with 10-100 g/l HCl.

22. A process according to claim 21, characterized in that indium is recovered from the organic phase by bringing the latter into contact either with a $H_2SO_4$ solution with more than 100 g/l $H_2SO_4$ or with a HCl solution with 20-25 g/l HCl.

23. A process according to claim 20, characterized in that gallium is recovered from the organic phase by bringing the latter into contact either with a $H_2SO_4$ solution with more than 100 g/l $H_2SO_4$ or with a HCl solution with 40-100 g/l HCl.

24. A process according to claim 23, characterized in that gallium is recovered from the organic phase by bringing the latter into contact either with a $H_2SO_4$ solution with more than 150 g/l $H_2SO_4$ or with a HCl solution with 60-70 g/l HCl.

25. A process according to claim 20, characterized in that indium and gallium are recovered together from the organic phase by bringing the latter into contact either with a $H_2SO_4$ solution with more than 100 g/l $H_2SO_4$ or with a HCl solution with 40-70 g/l HCl.

26. A process according to claim 25, characterized in that said $H_2SO_4$ solution contains more than 150 g/l $H_2SO_4$.

**Patentansprüche**

1. Verfahren zur Abtrennung von Germanium aus einer germaniumhaltigen wäßrigen Sulfatlösung, wonach die Lösung in Kontakt gebracht wird mit einer organischen Phase, die ein substituiertes 8-Hydroxychinolin und eine phosphororganische Verbindung enthält, wobei der Kontakt bei einem pH-Wert durchgeführt wird, bei dem die organische Phase mit Germanium beladen wird,
**dadurch gekennzeichnet,**
daß man eine Indium und/oder Gallium enthaltende, germaniumhaltige wäßrige Sulfatlösung als germaniumhaltige wäßrige Sulfatlösung verwendet, man eine Verbindung mit einem Gehalt von mindestens einer phosphorhaltigen Säurefunktion als phosphororganische Verbindung verwendet, und man den Kontakt bei einem pH-Wert von 0,5 bis 2,5 in Gegenwart von Indium und Gallium sowie in Abwesenheit von Gallium, und bei einem pH-Wert von 0,5 bis 4 in Abwesenheit von Indium durchführt, wodurch die organische Phase auch mit Indium und/oder Gallium beladen wird.

2. Verfahren nach Anspruch 1, dadurch gekennzeichnet, daß die germaniumhaltige wäßrige Sulfatlösung neben Wasser Zinksulfat als Hauptbestandteil enthält.

3. Verfahren nach Anspruch 2, dadurch gekennzeichnet, daß es sich bei der Lösung um ein Zwischen- oder Nebenprodukt der Elektrometallurgie von Zink handelt.

4. Verfahren nach einem der Ansprüche 1 bis 3, dadurch gekennzeichnet, daß als substituiertes 8-Hydroxychinolin ein Chinolin aus der Gruppe von Chinolinen mit der allgemeinen Formel verwendet wird:

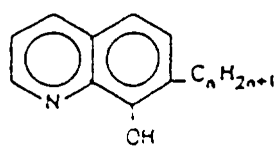

wobei n zwischen 5 und 15 liegt.

5. Verfahren nach Anspruch 4, dadurch gekennzeichnet, daß man 7-(1-Methyl-4-ethyl)-octyl-8-hydroxychinolin als substituiertes 8-Hydroxychinolin verwendet.

6. Verfahren nach einem der Ansprüche 1 bis 5, dadurch gekennzeichnet, daß als phosphororganische Verbindung eine Verbindung aus der Gruppe von Verbindungen mit der allgemeinen Formel verwendet wird:

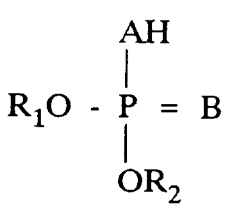 or 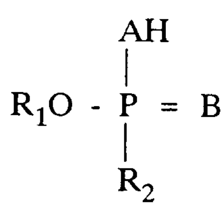 or 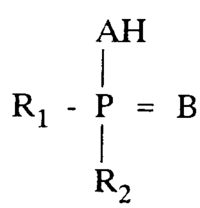

wobei
$R_1$ ein Alkyl-, Alkenyl-, Aryl- oder Alkylarylradikal oder ein alicyclisches Radikal mit 1 bis 20, vorzugsweise 5 bis 15, Kohlenstoffatomen ist,
$R_2$ Wasserstoff oder ein Alkyl-, Alkenyl-, Aryl-, Alkylarylradikal oder ein alicyclisches Radikal mit 1 bis

20, vorzugsweise 5 bis 15, Kohlenstoffatomen ist, und
A und B, die identisch oder verschieden sein können, für ein Sauerstoff- oder Schwefelatom stehen.

**7.** Verfahren nach Anspruch 6, dadurch gekennzeichnet, daß man Mono-(2-ethyl)-hexyl-(2-ethyl)-hexyl-phosphonsäureester als phosphororganische Verbindung verwendet.

**8.** Verfahren nach Anspruch 6, dadurch gekennzeichnet, daß man (2-Ethyl)-hexylbenzyl-phosphonsäure als phosphororganische Verbindung verwendet.

**9.** Verfahren nach einem der Ansprüche 1 bis 8, dadurch gekennzeichnet, daß das substituierte 8-Hydroxychinolin und die phosphororganische Verbindung in einem Volumenverhältnis von 1:10 bis 10:1 verwendet werden.

**10.** Verfahren nach Anspruch 9, dadurch gekennzeichnet, daß das Verhältnis von 1:2 bis 2:1 reicht.

**11.** Verfahren nach einem der Ansprüche 1 bis 10, dadurch gekennzeichnet, daß es sich bei der organischen Phase um eine Flüssigkeit handelt, deren Hauptkomponente ein inertes Lösungsmittel ist.

**12.** Verfahren nach Anspruch 11, dadurch gekennzeichnet daß die organische Phase ein Mittel enthält, das die Bildung einer Emulsion verhindert.

**13.** Verfahren nach Anspruch 12, dadurch gekennzeichnet, daß es sich bei dem Mittel um Isodecanol handelt.

**14.** Verfahren nach einem der Ansprüche 1 bis 10, dadurch gekennzeichnet, daß die organische Phase über einen festen Träger in Form eines Harzes oder einer porösen Membran verfügt, der das substituierte 8-Hydroxychinolin und die phosphororganische Verbindung trägt.

**15.** Verfahren nach einem der Ansprüche 1 bis 14, dadurch gekennzeichnet, daß man den Kontakt bei einer Temperatur über 40 °C durchführt.

**16.** Verfahren nach Anspruch 15, dadurch gekennzeichnet, daß die Temperatur unter 80 °C liegt.

**17.** Verfahren nach einem der Ansprüche 1 bis 16, dadurch gekennzeichnet, daß man den Kontakt bei einem pH-Wert von 1 bis 2,5 in Gegenwart von Indium und Gallium, bei einem pH-Wert von 1 bis 2 in Abwesenheit von Gallium, und bei einem pH-Wert von 1 bis 4 in Abwesenheit von Indium durchführt.

**18.** Verfahren nach Anspruch 17, dadurch gekennzeichnet, daß man den Kontakt bei einem pH-Wert von 1 bis 2 in Gegenwart von Indium und Gallium, bei einem pH-Wert von 1,2 bis 1,7 in Abwesenheit von Gallium, und bei einem pH-Wert von 1 bis 2,5 in Abwesenheit von Indium durchführt.

**19.** Verfahren nach Anspruch 18, dadurch gekennzeichnet, daß man den Kontakt bei einem pH-Wert von 1,5 bis 1,7 in Anwesenheit von Indium und Gallium und bei einem pH-Wert von 1,5 bis 2 in Abwesenheit von Indium durchführt.

**20.** Verfahren nach einem der Ansprüche 1 bis 19, dadurch gekennzeichnet, daß Germanium aus der organischen Phase rückgewonnen wird, indem letztere mit einer NaOH-Lösung in Kontakt gebracht wird.

**21.** Verfahren nach Anspruch 20, dadurch gekennzeichnet, daß Indium aus der organischen Phase rückgewonnen wird, indem letztere entweder mit einer $H_2SO_4$-Lösung mit mehr als 50 g/l $H_2SO_4$ oder mit einer HCl-Lösung mit 10 bis 100 g/l HCl in Kontakt gebracht wird.

**22.** Verfahren nach Anspruch 21, dadurch gekennzeichnet, daß Indium aus der organischen Phase rückgewonnen wird, indem letztere entweder mit einer $H_2SO_4$-Lösung mit mehr als 100 g/l $H_2SO_4$ oder mit einer HCl-Lösung mit 20 bis 25 g/l HCl in Kontakt gebracht wird.

23. Verfahren nach Anspruch 20, dadurch gekennzeichnet, daß Gallium aus der organischen Phase rückgewonnen wird, indem letztere entweder mit einer $H_2SO_4$-Lösung mit mehr als 100 g/l $H_2SO_4$ oder mit einer HCl-Lösung mit 40 bis 100 g/l HCl in Kontakt gebracht wird.

24. Verfahren nach Anspruch 23, dadurch gekennzeichnet, daß Gallium aus der organischen Phase rückgewonnen wird, indem letztere entweder mit einer $H_2SO_4$-Lösung mit mehr als 150 g/l $H_2SO_4$ oder mit einer HCl-Lösung mit 60 bis 70 g/l HCl in Kontakt gebracht wird.

25. Verfahren nach Anspruch 20, dadurch gekennzeichnet, daß Indium und Gallium zusammen aus der organischen Phase rückgewonnen werden, indem letztere entweder mit einer $H_2SO_4$-Lösung mit mehr als 100 g/l $H_2SO_4$ oder mit einer HCl-Lösung mit 40 bis 70 g/l HCl in Kontakt gebracht wird.

26. Verfahren nach Anspruch 25, dadurch gekennzeichnet, daß die $H_2SO_4$-Lösung mehr als 150 g/l $H_2SO_4$ enthält.

## Revendications

1. Procédé pour la séparation du germanium d'une solution aqueuse germanifère de sulfates, suivant lequel cette solution est mise en contact avec une phase organique, contenant une hydroxy-8 quinoléine substituée et un composé organophosphoré, ledit contact étant effectué à un pH tel que la phase organique se charge de germanium, caractérisé en ce que l'on utilise une solution aqueuse germanifère de sulfates contenant de l'indium et/ou du gallium comme solution aqueuse germanifère de sulfates, que l'on utilise un composé contenant au moins une fonction acide phosphorée comme composé organophosphoré et que l'on effectue ledit contact en présence d'indium et de gallium ainsi qu'en l'absence de gallium à un pH de 0,5-2,5 et en l'absence d'indium à un pH de 0,5-4, la phase organique se chargeant ainsi également d'indium et/ou de gallium.

2. Procédé selon la revendication 1, caractérisé en ce que la solution aqueuse germanifère de sulfates, contient, abstraction faite de l'eau, du sulfate de zinc comme composant principal.

3. Procédé selon la revendication 2, caractérisé en ce que la solution est un produit intermédiaire ou un sous-produit de la récupération électrolytique du zinc.

4. Procédé selon l'une des revendications 1-3, caractérisé en ce qu'on utilise comme hydroxy-8 quinoléine une quinoléine du groupe des quinoléines de formule générale

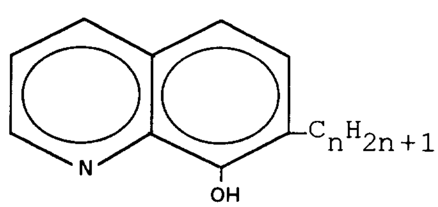

n étant compris entre 5 et 15.

5. Procédé selon la revendication 4, caractérisé en ce qu'on utilise la 7-(1-méthyl-4-éthyl)-octylhydroxy-8 quinoléine comme ladite hydroxy-8 quinoléine substituée.

6. Procédé selon l'une des revendications 1-5, caractérisé en ce qu'on utilise comme composé organophosphoré un composé du groupe des composés de formule générale

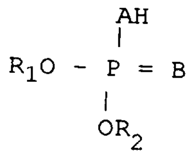 ou 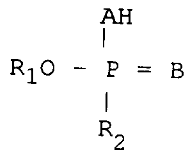 ou 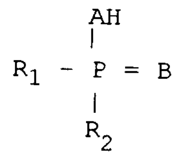

dans lesquelles
R1 est un radical alkyle, alcényle, aryle ou alkylaryle ou un radical alicyclique comportant de 1 à 20 atomes de carbone, R2 est de l'hydrogène ou un radical alkyle, alcényle, aryle ou alkylaryle ou un radical alicyclique comportant de 1 à 20 atomes de carbone, et
A et B, qui peuvent être les mêmes ou différents, représentent un atome d'oxygène ou de soufre.

**7.** Procédé selon la revendication 6, caractérisé en ce qu'on utilise l'acide mono-(2-éthyl)-hexyl-(2-éthyl)-héxylphosphonique comme ledit composé organophosphoré.

**8.** Procédé selon la revendication 6, caractérisé en ce qu'on utilise l'acide mono-(2-éthyl-)-hexyl-benzylphosphonique comme ledit composé organophosphoré.

**9.** Procédé selon l'une des revendications 1-8, caractérisé en ce qu'on utilise un rapport volumétrique hydroxy-8 quinoléine substituée/composé organophosphoré compris entre 1:10 et 10:1.

**10.** Procédé selon la revendication 9, caractérisé en ce que ledit rapport est compris entre 1:2 et 2:1.

**11.** Procédé selon l'une des revendications 1 à 10, caractérisé en ce que la phase organique est un liquide dont le composant principal est un solvant inerte.

**12.** Procédé selon la revendication 11, caractérisé en ce que la phase organique contient un agent qui empêche la formation d'émulsions.

**13.** Procédé selon la revendication 12, caractérisé en ce que ledit agent est l'isodécanol.

**14.** Procédé selon l'une des revendications 1-10, caractérisé en ce que la phase organique contient un support solide sous la forme d'une résine ou d'une membrane poreuse, portant la hydroxy-8 quinoléine substituée et le composé organophosphoré.

**15.** Procédé selon l'une des revendications 1-14, caractérisé en ce qu'on effectue ledit contact au-dessus de 40 °C.

**16.** Procédé selon la revendication 15, caractérisé en ce que ladite température est en-dessous de 80 °C.

**17.** Procédé selon l'une des revendications 1-16, caractérisé en ce qu'on effectue ledit contact en présence d'indium et de gallium à un pH de 1-2,5, en l'absence de gallium à un pH de 1-2, et en l'absence d'indium à un pH de 1-4.

**18.** Procédé selon la revendication 17, caractérisé en ce qu'on effectue ledit contact en présence d'indium et de gallium à un pH de 1-2, en l'absence de gallium à un pH de 1,2-1,7 et en l'absence d'indium à un pH de 1-2,5.

**19.** Procédé selon la revendication 18, caractérisé en ce qu'on effectue ledit contact en présence d'indium et de gallium à un pH de 1,5-1,7 et en l'absence d'indium à un pH de 1,5-2.

**20.** Procédé selon l'une des revendications 1-19, caractérisé en ce qu'on récupère le germanium de la phase organique en mettant celle-ci en contact avec une solution de NaOH.

**21.** Procédé selon la revendication 20, caractérisé en ce qu'on récupère l'indium de la phase organique en mettant celle-ci en contact soit avec une solution de $H_2SO_4$ soit avec une solution d'HCl à 10-100 g/l d'HCl.

**22.** Procédé selon la revendication 21, caractérisé en ce qu'on récupère l'indium de la phase organique en mettant celle-ci en contact soit avec une solution de $H_2SO_4$ à plus de 100 g/l de $H_2SO_4$ soit avec une solution d'HCl à 20-50 g/l d'HCl.

**23.** Procédé selon la revendication 20, caractérisé en ce qu'on récupère le gallium de la phase organique en mettant celle-ci en contact soit avec une solution de $H_2SO_4$ à plus de 100 g/l de $H_2SO_4$ soit avec

une solution d'HCl à 40-100 g/l d'HCl.

**24.** Procédé selon la revendication 23, caractérisé en ce qu'on récupère le gallium de la phase organique en mettant celle-ci en contact soit avec une solution de $H_2SO_4$ à plus de 150 g/l de $H_2SO_4$ soit avec une solution d'HCl à 60-70 g/l d'HCl.

**25.** Procédé selon la revendication 20, caractérisé en ce qu'on récupère en même temps l'indium et le gallium de la phase organique en mettant celle-ci en contact soit avec une solution de $H_2SO_4$ à plus de 100 g/l de $H_2SO_4$ soit avec une solution d'HCl à 40-70 g/l d'HCl.

**26.** Procédé selon la revendication 25, caractérisé en ce que ladite solution de $H_2SO_4$ contient plus de 150 g/l de $H_2SO_4$.

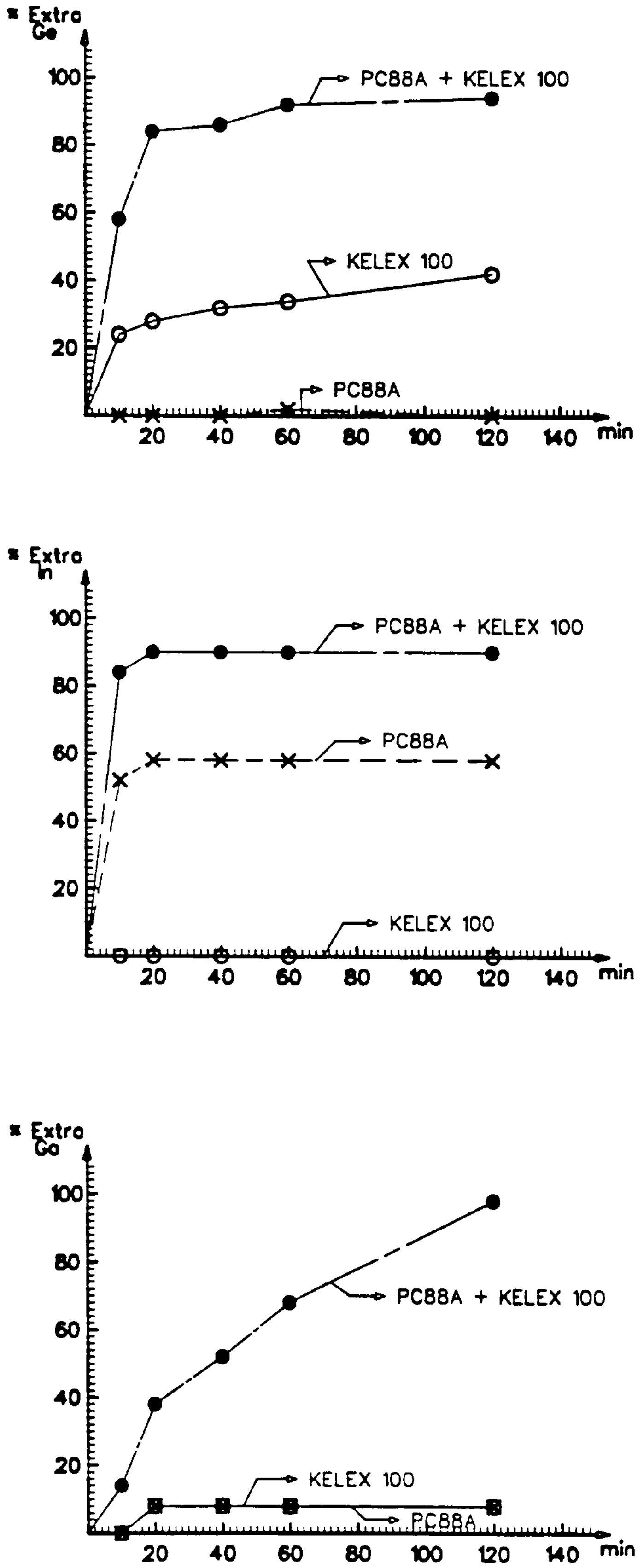
% Extra Ge
100
80
60
40
20
PC88A + KELEX 100
KELEX 100
PC88A
20
40
60
80
100
120
140
min
% Extra In
100
80
60
40
20
PC88A + KELEX 100
PC88A
KELEX 100
20
40
60
80
100
120
140
min
% Extra Ga
100
80
60
40
20
PC88A + KELEX 100
KELEX 100
PC88A
20
40
60
80
100
120
140
min

Fig.1

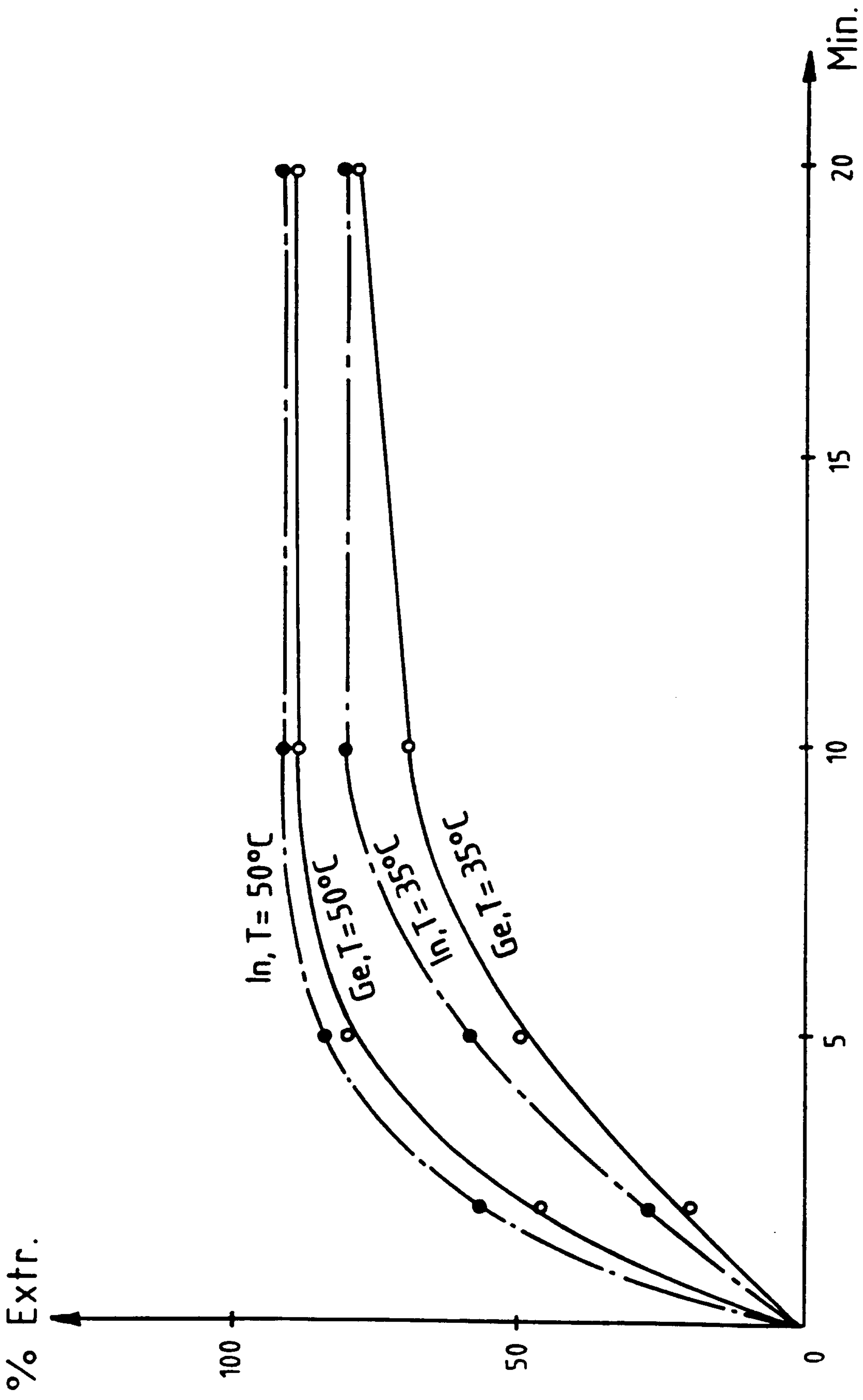


fig. 2

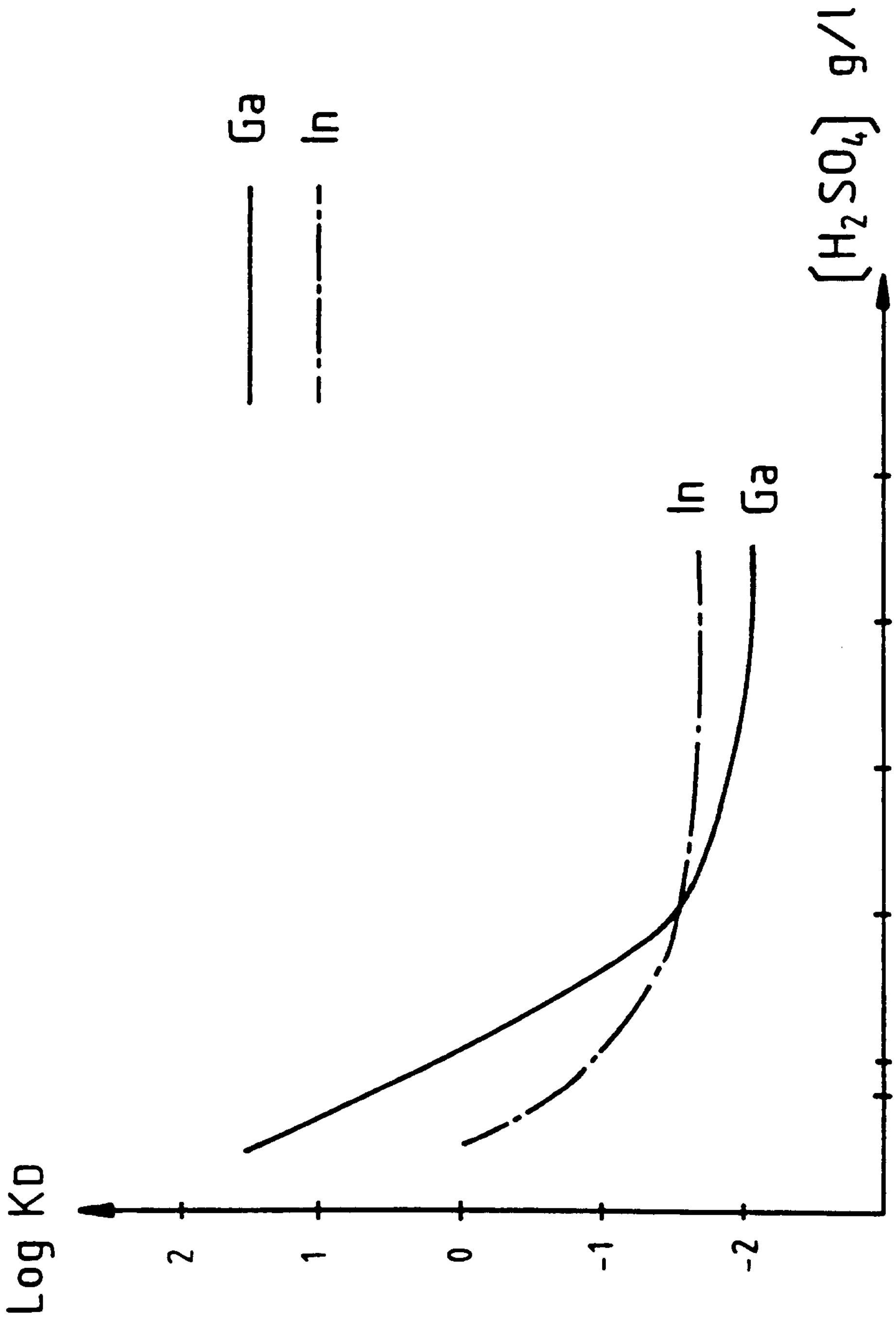


fig. 3

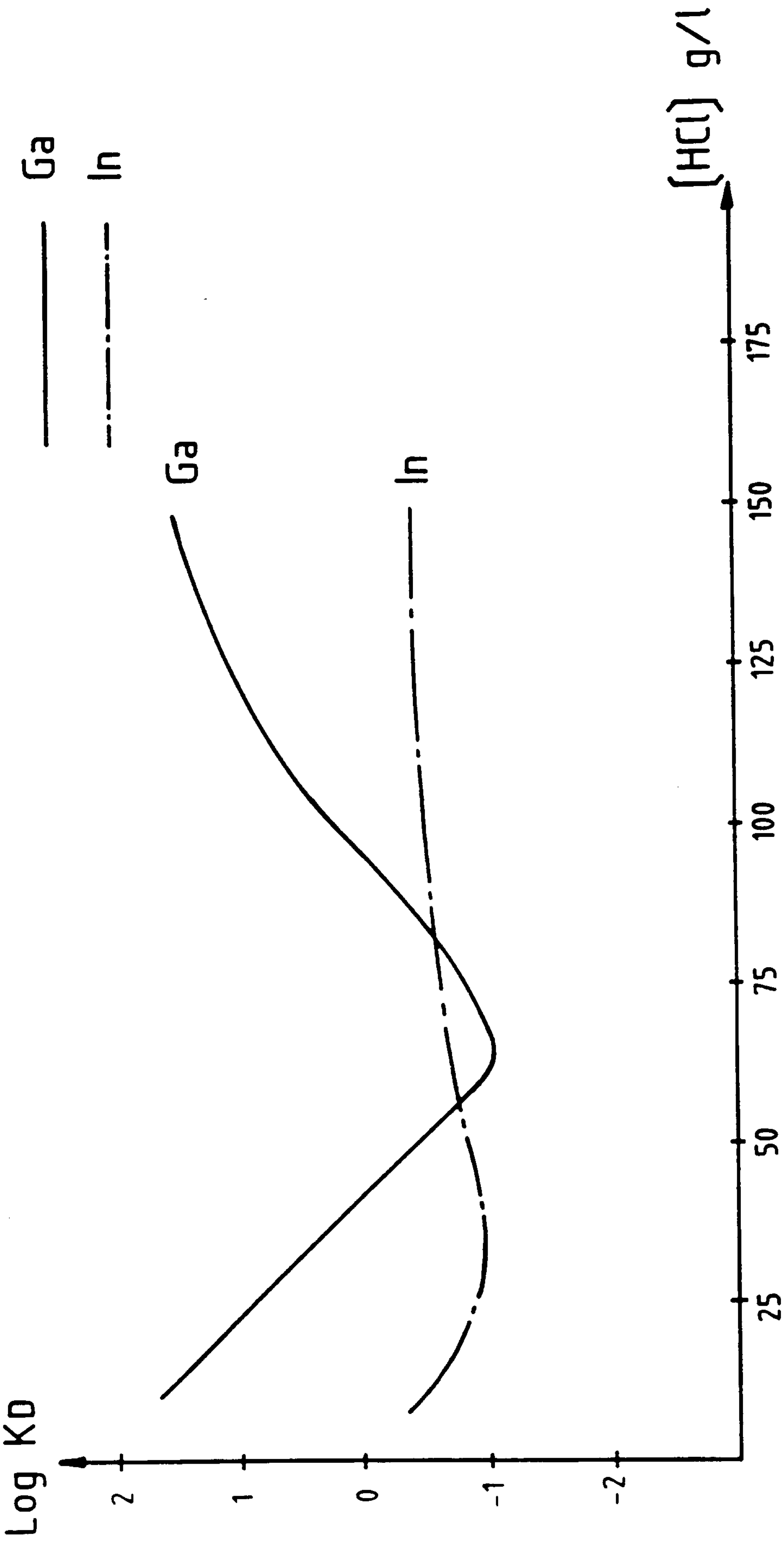


fig. 4